(19) Europäisches Patentamt
European Patent Office
Office européen des brevets

(11) **EP 3 493 296 A1**

(12) **EUROPEAN PATENT APPLICATION**
published in accordance with Art. 153(4) EPC

(43) Date of publication:
**05.06.2019 Bulletin 2019/23**

(21) Application number: **17834400.8**

(22) Date of filing: **26.07.2017**

(51) Int Cl.:
**H01M 2/16** (2006.01)      **H01M 10/04** (2006.01)
**H01M 10/0587** (2010.01)

(86) International application number:
**PCT/JP2017/027021**

(87) International publication number:
**WO 2018/021398 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.07.2016 JP 2016148259**

(71) Applicant: **Toray Industries, Inc.**
**Tokyo 103-8666 (JP)**

(72) Inventors:
• **MIZUNO, Naoki**
**Nasushiobara-shi**
**Tochigi 329-2763 (JP)**
• **TSUJIMOTO, Jun**
**Nasushiobara-shi**
**Tochigi 329-2763 (JP)**
• **KAJITA, Atsushi**
**Nasushiobara-shi**
**Tochigi 329-2763 (JP)**

(74) Representative: **Mewburn Ellis LLP**
**City Tower**
**40 Basinghall Street**
**London EC2V 5DE (GB)**

(54) **MULTILAYER WOUND BODY**

(57)    The purpose of the present invention is to provide a multilayer wound body for battery separators, which does not physically damage a porous layer of a separator due to blocking, while having both wet-state adhesion and dry-state adhesion. The present invention is a multilayer wound body that is obtained by laminating and winding a battery separator, which comprises a porous layer containing a fluororesin on at least one surface of a polyolefin microporous membrane, and a film containing inorganic particles and a thermoplastic resin. This multilayer wound body is configured such that the amount of linear oligomers derived from the thermoplastic resin in the surface of the film is 30 $\mu g/m^2$ or less.

FIG. 1

## Description

Technical Field

The present invention relates to a laminated roll of a battery separator.

Background Art

Nonaqueous electrolyte secondary batteries, particularly lithium ion secondary batteries, have been widely used in small electronic devices such as mobile phones and personal digital assistants. Cylindrical batteries, square batteries, laminated batteries, and the like have been developed. These batteries generally have a configuration in which an electrode body (laminated electrode body) in which a positive electrode and a negative electrode are laminated via a separator, or an electrode body (wound electrode body) in which a positive electrode and a negative electrode are wound in a spiral shape, and a non-aqueous electrolytic solution are housed in an outer package.

In a separator for a nonaqueous electrolyte secondary battery of the related art, a microporous membrane mainly made of polyolefin resin is used. Fine pores of the separator are blocked to inhibit flow of current at the time of abnormal heating-up of the battery, thereby preventing ignition or the like.

In recent years, attempts have been made to improve battery characteristics by providing a porous layer on one or both surfaces of a microporous membrane. For example, there is a separator including a porous layer containing a fluororesin or acrylic resin in order to impart adhesiveness to an electrode (Patent Documents 1 to 8). Further, when inorganic particles are added to the porous layer, fusion shrinkage of the separator can be prevented and expansion of a short-circuit part between electrodes can be prevented even when a sharp metal passes through a battery by accident or the like, and a sudden short circuit and heating-up of the battery are caused.

Patent Document 1 describes an electrode body including a positive electrode, a negative electrode, a three-layer separator made of polypropylene-polyethylene-polypropylene, and an adhesive resin layer made of polyvinylidene fluoride and alumina powder disposed between the electrodes and the separator.

Patent Document 2 describes, in Example 1, an organic separator with a porous membrane obtained by applying a slurry prepared by mixing and dispersing an N-methylpyrrolidone (NMP) solution of a binder and alumina particles to a polypropylene separator. The NMP solution of a binder is prepared by stirring, with a primary mixer, an NMP solution containing a first polymer (polyvinylidene fluoride homopolymer) and an NMP solution containing a second polymer (a polymer containing an acrylonitrile monomer, a monomer derived from 1,3-butadiene, a methacrylic acid monomer, and a butyl acrylate monomer).

Patent Document 3 describes, in Example, an electrode body in which a positive electrode and a negative electrode are thermally bonded via an inorganic fine particle-containing sheet (insulating adhesive layer). The inorganic fine particle-containing sheet is obtained by being dried after applying a slurry prepared by mixing an NMP solution in which blended materials of a vinylidene fluoride-hexafluoropropylene copolymer (VdF-HFP copolymer) and poly(ethyl methacrylate) have been dissolved and an NMP solution in which a spherical alumina powders are dispersed with a ball mill, to a base PET film.

Patent Document 4 describes, in Example 1, a separator obtained by applying a slurry to a polyethylene porous membrane, the slurry being prepared by adding a VdF-HFP copolymer and cyanoethyl pullulan to acetone and then adding barium titanate powder, and dispersing them with a ball mill.

Patent Document 5 describes, in Example 1, a separator in which a porous layer is formed by applying a solution to a polyethylene microporous membrane, the solution being obtained by dissolving a VdF-HFP copolymer (HFP unit: 0.6 mol%) and a VdF-HFP copolymer (weight average molecular weight: 470,000, and HFP unit: 4.8 mol%) in a dimethylacetamide and tripropylene glycol solution.

Patent Document 6 describes, in Example 1, a separator in which a porous layer is formed by applying a solution to a polyethylene microporous membrane, the solution being obtained by dissolving polyvinylidene fluoride (PVdF, weight average molecular weight: 500,000) and a VdF-HFP copolymer (weight average molecular weight: 400,000, and HFP unit: 5 mol%) in a dimethylacetamide and tripropylene glycol solution.

Patent Document 7 describes, in Example 1, a separator in which a porous layer is formed by applying a solution to a polyethylene microporous membrane, the solution being obtained by dissolving PVdF (weight average molecular weight: 700,000) and a VdF-HFP copolymer (weight average molecular weight: 470,000, and HFP unit: 4.8 mol%) in a dimethylacetamide and tripropylene glycol solution.

Patent Document 8 describes, in Example 1, a separator in which a porous layer is formed by applying a solution to a polyethylene microporous membrane, the solution being obtained by dissolving PVdF (weight average molecular weight: 350,000) and a VdF-HFP polymer (weight average molecular weight: 270,000, and HFP copolymerization: 4.8 mol%) in a dimethylacetamide and tripropylene glycol solution.

As described above, a separator including a porous layer containing a fluororesin or a porous layer containing a fluororesin and acrylic resin is used to improve adhesiveness between a separator and an electrode.

Prior Art Document

Patent Document

Patent Document 1: WO-A1-1999-036981
Patent Document 2: JP-A-2013-206846
Patent Document 3: JP-A-2013-122009
Patent Document 4: JP-A-2013-519206
Patent Document 5: Japanese Patent No. 5282179
Patent Document 6: Japanese Patent No. 5282180
Patent Document 7: Japanese Patent No. 5282181
Patent Document 8: Japanese Patent No. 5342088

Summary of Invention

Technical Problems

A roll electrode body is obtained by interposing a separator fed from a roll between a positive electrode and a negative electrode and winding these with a winding device under tension. Although the positive electrode and the negative electrode hardly expand in response to tension during winding, the separator is wound while being stretched to some extent in a machine direction. Therefore, the separator shrinks slowly and tries to return to an original length as time passes, a force parallel to a surface of the separator is generated at an interface of the electrodes and the separator, and deflection or distortion is likely to occur in the roll electrode body (particularly, a flat wound electrode body) or the like. Further, partial peeling at the interface of the separator and the electrodes is likely to occur due to swelling and contraction between the electrodes accompanying charging and discharging, resulting in swelling of a battery, an increase in internal resistance of the battery, and a decrease in cycle performance. Particularly, it is difficult to apply pressure in a laminated battery as compared to a square battery or cylindrical battery to which pressure can be applied by an exterior body. Accordingly, there is a problem that the battery is likely to be affected by the partial peeling at the interface between the separator and the electrodes.

Solution to Problems

When the separator is made wider or longer along with an increase in the size of the battery, the above-mentioned problems become conspicuous, and it is expected that production yield deteriorates. In order to solve the above problems, the separator is required to have adhesiveness in a wet state during charging and discharging of the battery, and further improved adhesiveness to the electrodes in a dry state after the roll electrode body is manufactured. Meanwhile, when adhesiveness of the porous layer is improved, adhesiveness between the electrodes and the separator is improved, and adhesiveness between the separators also increases. At this time, when the separator is stored in a roll state, blocking, i.e. adhesion between the separators, is likely to occur, and physical damages such as peeling off of the porous layer of the separator is expected to occur.

The present inventors provide a roll of a battery separator having good adhesiveness to an electrode both in a wet state in which a battery separator contains an electrolytic solution and in a dry state in which the separator does not contain the electrolytic solution. According to the roll, physical damages to a porous layer due to blocking, i.e. adhesion between the separators, can be prevented. The present inventors have found that physical damages to the porous layer due to blocking can be prevented by winding the separator in a state where the separator is stacked with a film of specific thermoplastic resin, and thus, the present invention has been completed. That is, the present invention has the following configuration.

(1) A laminated roll, in which a battery separator and a film are laminated and wound,
wherein the battery separator comprises a porous layer containing a fluororesin on at least one surface of a polyolefin microporous membrane,
wherein the film comprises an inorganic particle and a thermoplastic resin, and
wherein an amount of linear oligomers derived from the thermoplastic resin on a surface of the film is 30 $\mu$g/m$^2$ or less.
(2) It is preferred that the fluororesin contains a vinylidene fluoride-hexafluoropropylene copolymer.

(3) It is preferred that the vinylidene fluoride-hexafluoropropylene copolymer has a weight average molecular weight of more than 750,000 and 2,000,000 or less.

(4) It is preferred that the fluororesin contains a vinylidene fluoride-hexafluoropropylene copolymer (A) and a polymer (B) containing a vinylidene fluoride unit, the vinylidene fluoride-hexafluoropropylene copolymer (A) contains a hydrophilic group and a hexafluoropropylene unit, and a content of the hexafluoropropylene unit is 0.3 mol% or more and 3 mol% or less, and the polymer (B) containing a vinylidene fluoride unit has a melting point of 60°C or higher and 145°C or lower and a weight average molecular weight of 100,000 or more and 750,000 or less.

(5) It is preferred that the porous layer contains a particle.

(6) It is preferred that the particle includes at least one selected from the group consisting of alumina, titania, boehmite, and barium sulfate.

(7) It is preferred that the porous layer has a thickness of 0.5 μm or more and 3 μm or less per one side of the polyolefin microporous membrane.

(8) It is preferred that the thermoplastic resin contains polyethylene terephthalate.

(9) It is preferred that the film has a thickness of 5 μm or more and 50 μm or less.

(10) It is preferred that the battery separator has a length of 1000 m or more in a winding direction.

Advantageous Effects of Invention

According to the present invention, when the battery separator is taken as a roll, the battery separator having good adhesiveness to an electrode both in a wet state in which the separator contains an electrolytic solution and in a dry state in which the separator does not contain the electrolytic solution, the laminated roll which prevents physical damages to the porous layer due to blocking can be provided.

Brief Description of Drawings

FIG. 1 is a front cross-sectional view schematically illustrating a test on a bending strength in a wet state.
FIG. 2 is a front view schematically illustrating a blocking resistance test method.

Description of Embodiments

In the laminated roll in the present invention, a battery separator and a film (hereinafter, also referred to as "thermoplastic resin film") containing inorganic particles and thermoplastic resin are laminated and wound, and an amount of linear oligomers derived from the thermoplastic resin on a surface of the film is 30 μg/m$^2$ or less. Embodiments of the present invention are described below. The present invention is not limited to the following embodiments.

1. Thermoplastic resin film

The laminated roll according to the present invention includes the thermoplastic resin film wound so that the thermoplastic resin film is laminated on a porous layer of the battery separator. The porous layer contains a fluororesin. The thermoplastic resin is not particularly limited, and examples thereof includes polyethylene terephthalate (PET), polyethylene terephthalate, cellulose acetate, polystyrene, polyphenylene ether, polyethylene, polypropylene, polyamide, polyetherimide, polysulfone, polyphenylene sulfide, and the like. Among these, polyethylene terephthalate is preferable from a viewpoint of appropriate rigidity and being less likely to be wrinkled when the laminated roll is manufactured.

The battery separator includes the porous layer containing a fluororesin and has good adhesiveness in a dry state and good adhesiveness in a wet state. When the battery separator is taken as a roll, adhesion between the separators occurs by the fluororesin. When the separator is unwound, the porous layer may be peeled off, resulting in physical damages to the separator. The laminated roll in the present invention can prevent the battery separator from being physically damaged at the time of blocking, by interposing a specific thermoplastic resin film between the battery separators.

[1] Amount of linear oligomers on surface of thermoplastic resin film

By adjusting the amount of linear oligomers derived from the thermoplastic resin present on the surface of the film to a specific range, the thermoplastic resin film used in the laminated roll in the present invention can prevent blocking from occurring between the separators, and prevent the porous layer from being transferred to the thermoplastic resin film.

The amount of linear oligomers herein refers to the amount of linear oligomers obtained by the measurement method described below ([6] amount of linear oligomers on surface of thermoplastic resin film), and is a total amount of linear dimers and linear trimers present on the surface of the thermoplastic resin film among the linear oligomers derived from the thermoplastic resin used as a raw material of the thermoplastic resin film. For example, when the thermoplastic resin contained in the thermoplastic resin film is polyethylene terephthalate, the linear dimers refer to molecules having linearly changed two ethylene terephthalates, each of which is a repeating unit of the polyethylene terephthalate, and having a carboxylic acid terminal or a hydroxyl group terminal. Similarly, the linear trimers refer to molecules having linearly changed three ethylene terephthalates and having a carboxylic acid terminal or a hydroxyl group terminal.

The upper limit of the amount of linear oligomers is 30 $\mu g/m^2$, preferably 20 $\mu g/m^2$, and particularly preferably 10 $\mu g/m^2$. When the amount of linear oligomers on the surface of the thermoplastic resin film exceeds 30 $\mu g/m^2$, blocking is likely to occur because of high affinity with the porous layer. When the blocking occurs, a part of the porous layer may be transferred to the surface of the thermoplastic resin film when the laminated roll is unwound. From a viewpoint of reducing the affinity between the thermoplastic resin film and the battery separator, the amount of linear oligomers is preferably as small as possible, and the lower limit of the amount of linear oligomers is preferably 3 $\mu g/m^2$. When the amount of linear oligomers is 3 $\mu g/m^2$ or more, slipperiness with the battery separator including the porous layer are good, making the handling easy. Further, localized air bubbles are less likely to enter between the thermoplastic resin film and the battery separator, so that deterioration of flatness of the battery separator can be prevented, and the thermoplastic resin film is less likely to be expensive. In the present invention, the amount of linear oligomers present on the surface of the thermoplastic resin film refers to the amount of linear oligomers on the surface of the thermoplastic resin film measured by the measurement method in Examples described below.

In the present invention, a total amount of the linear dimers and the linear trimers, which are contained in the thermoplastic resin film, per unit mass (hereinafter, also referred to as "amount of linear oligomers") is 3.0 $\mu g/g$ or less, preferably 2.0 $\mu g/g$ or less, and particularly preferably 1.5 $\mu g/g$ or less. The lower limit of the amount of linear oligomers is 0.1 $\mu g/g$, and preferably 0.2 $\mu g/g$. When the amount of linear oligomers falls within the above range, the amount of linear oligomers on the surface of the thermoplastic resin film can be set to an appropriate range.

As a method of adjusting the amount of linear oligomers derived from the thermoplastic resin that can be used in the present invention, for example, in a case of polyethylene terephthalate, the following method can be used: a PET chip once polymerized is further polymerized in a solid phase in a temperature range of 200 to 250°C under a reduced pressure of 0.1 to 10 mmHg, and then, the amount of oligomers contained in the chip is adjusted. The amount of oligomers may also be adjusted by extracting the oligomers in the chip by using a solvent, or by extracting a part of the oligomers using a solvent from the biaxially stretched heat-fixed film. Particularly, in the former method of adding the solid phase polymerization, the oligomers are preferably extruded in a short time at a temperature as low as possible since the adjusted amount of oligomers is increased based on a thermal equilibrium relationship when the temperature is high and the time is long in a step of extruding to the film. Further, the linear oligomers may be removed by washing the surface of the thermoplastic resin film with alcohol or the like. When the surface of the thermoplastic resin film is subjected to a corona treatment, a large number of linear oligomers are generated, and such a case is not preferable.

[2]Inorganic particles

The thermoplastic resin film used in the laminated roll in the present invention contains inorganic particles. Since the thermoplastic resin film contains the inorganic particles, slipperiness, blocking resistance, and handling properties such as winding properties are remarkably improved. As a result, the battery separator having adhesiveness higher than the battery separator in the related art and the thermoplastic resin film can be laminated and wound, and generation of static electricity can be remarkably prevented when the battery separator is unwound. Therefore, in the present invention, the thermoplastic resin film contains the inorganic particles on at least one surface thereof in order to impart appropriate unevenness.

The kind of the inorganic particles is not particularly limited, and preferable examples thereof include calcium carbonate, calcium phosphate, silica, crystalline glass particles, and the like.

An average particle diameter of the inorganic particles contained in the thermoplastic resin film is preferably 1 $\mu m$ or more and 3 $\mu m$ or less, and a content thereof is preferably 100 ppm or more and 1000 ppm or less. When these fall within the above range, the thermoplastic resin film has good slipperiness, blocking resistance, and handling properties such as winding properties, and is suitable as the thermoplastic resin film used in the laminated roll in the present invention from a viewpoint of haze. A method of adding the inorganic particles to the thermoplastic resin film can be performed by a known method. The inorganic particles may be added during the polymerization of the thermoplastic resin, or be added by blending slurry of the particles with the thermoplastic resin in a kneading extruder, or by blending the dried particles and the thermoplastic resin by using the kneading extruder. A specific example of the method of adding the inorganic particles to the thermoplastic resin is disclosed in JP-A-2004-148538 and the like.

[3]Properties of thermoplastic resin film

The thickness of the thermoplastic resin film is preferably 5 $\mu$m or more and 50 $\mu$m or less. The thickness of the thermoplastic resin film is preferably 5 $\mu$m or more from a viewpoint of sufficient flatness. Meanwhile, the thickness is preferably 50 $\mu$m or less since volume of the roll is less likely to be excessively large, and costs can be reduced.
The thermoplastic resin film used in the laminated roll of the present invention preferably has a haze of 5% or less for enabling defect inspection while being transported in a state of being laminated with the battery separator. The haze can be measured in accordance with JIS-K7136.

2. Polyolefin microporous membrane

The battery separator laminated and wound with the thermoplastic resin film in the roll in the present invention includes a porous layer containing a fluororesin on at least one surface of the polyolefin microporous membrane. The polyolefin microporous membrane is described first.

[1]Composition of polyolefin microporous membrane

Polyolefin resin constituting the microporous polyolefin membrane contains polyethylene resin or polypropylene resin as a main component. When a total mass of the polyolefin resin is defined as 100%, a content of the polyethylene resin is preferably 70% by mass or more, more preferably 90% by mass or more, and still more preferably 100% by mass.
The polyolefin resin is not particularly limited, and examples thereof include a polymer of ethylene, propylene, 1-butene, 4-methyl-1-pentene, 1-hexene, or the like. Among these, polyethylene or polypropylene is preferable from a viewpoint of shutdown characteristics for cutting current during abnormal temperature rising of the battery to inhibit excessive temperature rising, as well as basic characteristics such as electrical insulation and ion permeability. When necessary, various additives such as an antioxidant and an inorganic filler may be added to the polyolefin resin within a range that does not impair effects of the present invention.

[2] Properties of polyolefin porous membrane

The upper limit of the thickness of the polyolefin porous membrane used in the laminated roll in the present invention is preferably 25 $\mu$m, more preferably 9 $\mu$m, and still more preferably 7 $\mu$m. The lower limit thereof is preferably 3 $\mu$m, and more preferably 5 $\mu$m. When the thickness of the polyolefin porous membrane falls within the above preferable range, practical membrane strength and shutdown characteristics can be achieved and an area per unit volume of the battery case is not limited, and such a case is suitable for increasing a capacity of the battery.
The upper limit of air permeability of the polyolefin porous membrane is preferably 500 sec/100 ccAir, and more preferably 400 sec/100 ccAir. The lower limit thereof is preferably 50 sec/100 ccAir, more preferably 70 sec/100 ccAir, and still more preferably 100 sec/100 ccAir.
The upper limit of porosity of the polyolefin porous membrane is preferably 70%, more preferably 60%, and still more preferably 55%. The lower limit thereof is preferably 30%, more preferably 35%, and still more preferably 40%. When the air permeability and porosity of the polyolefin porous membrane fall within the above preferable ranges, functions of the battery can be sufficiently exhibited in terms of charging/discharging characteristics, particularly ion permeability (charging/discharging operation voltage) and life of the battery (closely related to an amount of an electrolytic solution retained). Further, the polyolefin porous membrane has sufficient mechanical strength and insulation properties. Accordingly, a battery using the polyolefin porous membrane is less likely to be short-circuited during charging and discharging.

[3] Method of manufacturing polyolefin microporous membrane

The method of manufacturing the polyolefin microporous membrane is not particularly limited as long as the polyolefin microporous membrane having desired properties can be manufactured, and a conventionally known method can be used. For example, methods described in Japanese Patent No. 2132327 and Japanese Patent No. 3347835, WO 2006/137540 A1, and the like can be used. Specifically, the following steps (1) to (5) are preferably included in this order:

(1) a step of melt-kneading the polyolefin resin and a film-forming solvent, thereby preparing a polyolefin solution;
(2) a step of extruding the polyolefin solution, followed by cooling an extrudate thereof thereby forming a gel-like sheet;
(3) a first stretching step of stretching the gel-like sheet;
(4) a step of removing the film-forming solvent from the stretched gel-like sheet; and

(5) a step of drying the sheet from which the film-forming solvent has been removed.

Hereinafter, each of the steps is described.

(1) Step of preparing polyolefin solution

A suitable film-forming solvent is added to the polyolefin resin, and a mixture thus obtained is then melt-kneaded to prepare the polyolefin resin solution. As a melt-kneading method, a method using a twin-screw extruder described in, for example, Japanese Patent No. 2132327 and Japanese Patent No. 3347835 can be used. Since the melt-kneading method is known, description thereof is omitted.

A blending ratio between the polyolefin resin and the film-forming solvent in the polyolefin solution is not particularly limited. When a total mass of the polyolefin solution is defined as 100%, it is preferred that the polyolefin resin is 20% by mass or more and 30 % by mass or less, and the film-forming solvent is 70% by mass or more and 80% by mass or less. When the ratio of the polyolefin resin falls within the above range, the swelling or neck-in can be prevented at a die outlet during the extrusion of the polyolefin solution, and the formability and self-supporting properties of an extruded molded body (gel-like molded body) are good.

(2) Step of forming gel-like sheet

The polyolefin solution is fed to a die from the extruder and is extruded in a sheet shape. A plurality of polyolefin solutions having the same or different compositions may also be fed to one die from the extruder, laminated in layers at the die, and extruded into a sheet shape.

The extrusion method may be either a flat die method or an inflation method. Extrusion temperature is preferably 140°C or more and 250°C or less, and extrusion speed is preferably 0.2 m/min or more and 15 m/min or less. The thickness can be adjusted by adjusting an extrusion amount of each of the polyolefin solutions. As for the extrusion method, methods disclosed in, for example, Japanese Patent No. 2132327 and Japanese Patent No. 3347835 can be used.

The gel-like sheet is formed by cooling the extruded molded body thus obtained. As for a method of forming the gel-like sheet, methods disclosed in, for example, Japanese Patent No. 2132327 and Japanese Patent No. 3347835 can be used. The cooling is preferably performed at a rate of 50°C/min or more at least until the gelation temperature. The cooling is preferably performed at 25°C or less. By the cooling, a microphase of the polyolefin separated by the film-forming solvent can be fixed. When the cooling rate falls within the above range, an appropriate degree of crystallinity is maintained, resulting in a gel-like sheet suitable for stretching. As for the cooling method, a method of bringing the extruded molded body into contact with a refrigerant such as cool air or cooling water, a method of bringing the extruded molded body into contact with a cooling roll, or the like can be used. It is preferable to cool the extruded molded body by bringing it into contact with a roll cooled by the refrigerant.

(3) First stretching step

Next, the gel-like sheet thus obtained is stretched at least in a uniaxial direction. The gel-like sheet contains the film-forming solvent, and it thus can be uniformly stretched. After being heated, the gel-like sheet is preferably stretched at a predetermined magnification by a tenter method, a roll method, an inflation method, or a combination thereof. The stretching may be uniaxial stretching or biaxial stretching, and is preferably biaxial stretching. In a case of the biaxial stretching, simultaneous biaxial stretching, sequential stretching or multistage stretching (for example, a combination of simultaneous biaxial stretching and sequential stretching) may be used.

A stretching ratio (area stretching ratio) in this step is preferably 9 times or more, more preferably 16 times or more, and particularly preferably 25 times or more. Stretching ratios in a machine direction (MD) and a width direction (TD) may be the same or different from each other. The stretching ratio in this step refers to an area stretching ratio of the microporous membrane immediately before being subjected to the next step with the microporous membrane immediately before this step as a reference.

(4) Removal of film-forming solvent

The film-forming solvent is removed (washed) by using a cleaning solvent. When the film-forming solvent is removed, a porous film containing fibrils forming a fine three-dimensional network structure is obtained since a polyolefin phase is phase-separated from a film-forming solvent phase. The porous film has pores (voids) three-dimensionally connected with each other. The cleaning solvent and a method of removing a film-forming solvent using the same are known, and description thereof is omitted. For example, methods disclosed in Japanese Patent No. 2132327 and JP-A-2002-256099 can be used.

(5) Drying

The microporous membrane from which the film-forming solvent has been removed is dried by a heat drying method or an air drying method. Drying temperature is preferably equal to or less than a crystal dispersion temperature (Tcd) of the polyolefin resin and is particularly preferably lower than Tcd by 5°C or more. When a total mass of the microporous membrane is defined as 100% (dry weight), the drying is preferably performed until an amount of the remaining cleaning solvent is 5% by mass or less, more preferably 3% by mass or less. When the amount of the remaining cleaning solvent falls within the above range, porosity of the microporous membrane is maintained during a subsequent stretching step and a heat treatment step of the microporous membrane, and deterioration of permeability is inhibited.

3. Porous layer

The porous layer provided on at least one surface of the polyolefin microporous membrane in the battery separator used in the laminated roll in the present invention is described.

The battery separator of the laminated roll in the present invention has good adhesiveness with an electrode via the porous layer both in a dry state and in a wet state. The porous layer of the battery separator contains a fluororesin, and examples of the fluororesin include a vinylidene fluoride homopolymer, a vinylidene fluoride/fluorinated olefin copolymer, a vinyl fluoride homopolymer, and a vinyl fluoride/fluorinated olefin copolymer, and a mixture thereof.

The porous layer may contain a vinylidene fluoride-hexafluoropropylene (VdF-HFP) copolymer (A) (hereinafter, simply referred to as "copolymer (A)") and a polymer (B) containing a vinylidene fluoride unit (hereinafter, simply referred to as "polymer (B)").

A particularly preferable embodiment of a vinylidene fluoride-hexafluoropropylene (VdF-HFP) copolymer (A) and the polymer (B) containing a vinylidene fluoride unit is described below.

[1] Vinylidene fluoride-hexafluoropropylene (VdF-HFP) copolymer (A)

The copolymer (A) used in the present invention contains a hydrophilic group, and preferably contains 0.3 mol% or more and 3 mol% or less of hexafluoropropylene. The copolymer (A) has high affinity to the nonaqueous electrolytic solution, high chemical and physical stability, and good adhesiveness in a wet state. The affinity to the electrolytic solution can be sufficiently maintained for use under a high temperature.

The copolymer (A) has a hydrophilic group, so that the copolymer (A) can be firmly bonded to active materials present on the surface of the electrode and a binder component in the electrode. Such an adhesion force is presumed to be due to hydrogen bonding. Examples of the hydrophilic group include a hydroxyl group, a carboxylic acid group, a sulfonic acid group, and salts thereof. Particularly, the carboxylic acid group and a carboxylic acid ester are preferable.

When the hydrophilic group is introduced into vinylidene fluoride, examples of a method for synthesis of the copolymer (A) include, for example, a method of copolymerizing monomers having a hydrophilic group such as maleic anhydride, maleic acid, maleic acid ester, and maleic acid monomethyl ester and introducing the copolymerized monomers into a main chain, and a method of introducing the copolymerized monomers as a side chain by grafting. A hydrophilic group modifying rate can be measured by FT-IR, NMR, quantitative titration, or the like. For example, in a case of a carboxylic acid group, the hydrophilic group modifying rate can be determined from an absorption intensity ratio of C-H stretching vibration and C=O stretching vibration of a carboxyl group by using FT-IR and taking a homopolymer as a reference.

The lower limit of a content of the hydrophilic group in the copolymer (A) is preferably 0.1 mol% or more, more preferably 0.3 mol% or more. The upper limit thereof is preferably 5 mol% or less, and more preferably 4 mol% or less. When the content of the hydrophilic group is 5 mol% or less, polymer crystallinity is less likely to be excessively low, an appropriate swelling degree with respect to the electrolytic solution is easily maintained, and a sufficient bending strength in a wet state can be ensured. When particles are contained in the porous layer, the particles can be prevented from falling off by allowing the content of the hydrophilic group to fall within the above preferable range.

The lower limit of a content of hexafluoropropylene in the copolymer (A) is preferably 0.3 mol% or more, more preferably 0.5 mol% or more, and the upper limit thereof is preferably 3 mol% or less, and more preferably 2.5 mol% or less. When the content of hexafluoropropylene is 0.3 mol% or more, the adhesiveness in a wet state is good since the polymer crystallinity is excessively high and the swelling degree with respect to the electrolytic solution is high. When the content of hexafluoropropylene is 3 mol% or less, the hexafluoropropylene does not swell excessively with respect to the electrolytic solution, and sufficient adhesiveness in a wet state can be ensured.

As the lower limit of the weight average molecular weight of the copolymer (A), it is more than 750,000, preferably 900,000 or more, and as the upper limit thereof, it is preferably 2,000,000 or less, more preferably 1,500,000 or less.

When the weight average molecular weight of the copolymer (A) falls within the above preferable range, time required to dissolve the copolymer (A) in a solvent is not extremely long, resulting in improved manufacturing efficiency. Further, appropriate gel strength can be maintained when the copolymer (A) is swollen in the electrolytic solution, resulting in an improved bending strength in a wet state. The weight average molecular weight in the present invention refers to a polystyrene-equivalent value obtained by gel permeation chromatography.

The copolymer (A) can be obtained by a known polymerization method. As for the known polymerization method, for example, a method described in JP-A-H11-130821 can be used. According to the method, ion exchange water, maleic acid monomethyl ester, vinylidene fluoride, and hexafluoropropylene are added to an autoclave to perform suspension polymerization, and polymer slurry thus obtained is dehydrated, followed by washing with water and drying to obtain a polymer powder. In this case, methyl cellulose as a suspending agent or diisopropyl peroxydicarbonate as a radical initiator can be used as appropriate.

The copolymer (A) may also be a copolymer obtained by further polymerizing monomers other than the monomers having a hydrophilic group within a range that does not impair properties thereof. Examples of the monomers other than the monomers having a hydrophilic group include monomers such as tetrafluoroethylene, trifluoroethylene, trichloroethylene, and vinyl fluoride.

[2] Polymer (B) containing vinylidene fluoride unit

The polymer (B) used in the present invention preferably has a melting point of 60°C or higher and 145°C or lower, and a weight average molecular weight of 100,000 or more and 750,000 or less. When these fall within the above range, the polymer (B) has high affinity to the non-aqueous electrolytic solution, high chemical and physical stability, and good adhesiveness in a dry state. Although the mechanism is not clear, the present inventors assume that the polymer (B) is flowable under heating and pressure conditions sufficient for exhibiting adhesiveness in a dry state, and becomes an anchor by allowing the polymer to enter the porous layer of the electrode, so that strong adhesiveness is maintained between the porous layer and the electrode. The polymer (B) can contribute to the adhesiveness in a dry state, prevention of deflection or distortion of the roll electrode body and the laminated electrode body, and improvement of transportation properties. The polymer (B) containing a vinylidene fluoride unit is a resin different from the copolymer (A).

As the lower limit of a melting point of the polymer (B), it is preferably 60°C or higher, more preferably 80°C or higher. As the upper limit thereof, it is preferably 145°C or less, more preferably 140°C or less. The melting point here refers to a temperature at a peak top of endothermic peak during temperature rising as measured by differential scanning calorimetry (DSC).

The polymer (B) is a resin containing a copolymer including polyvinylidene fluoride or a vinylidene fluoride unit. The polymer (B) can be obtained by a suspension polymerization method, which is similar to the case of the copolymer (A). The melting point of the polymer (B) can be adjusted by controlling crystallinity of a portion made of the vinylidene fluoride unit. For example, when the polymer (B) contains a monomer other than the vinylidene fluoride unit, the melting point of the polymer (B) can be adjusted by controlling a ratio of the vinylidene fluoride unit. As the monomer other than the vinylidene fluoride unit, examples thereof include one or two or more kinds of tetrafluoroethylene, trifluoroethylene, trichloroethylene, hexafluoropropylene, vinyl fluoride maleic anhydride, maleic acid, maleic acid ester, and maleic acid monomethyl ester. Examples of a method of adjusting the melting point include a method of adding the monomer when the polymer (B) is polymerized and introducing the mixture thus obtained into a main chain by copolymerization, and a method of introducing the mixture as a side chain by grafting. The melting point may also be adjusted by controlling a ratio of Head-to-Head bond ($-CH_2-CF_2-CF_2-CH_2-$) in the vinylidene fluoride unit.

The lower limit of the weight average molecular weight of the polymer (B) is preferably 100,000, more preferably 150,000, and the upper limit thereof is preferably 750,000, and more preferably 700,000.

By setting the melting point and weight average molecular weight of the polymer (B) within the above preferable ranges, the polymer (B) easily flows under heating and pressure conditions, and an appropriate adhesiveness in a dry state is obtained. When the melting point of the polymer (B) is equal to or less than the upper limit of the preferable range, press temperature can be kept low in the step of preparing the roll electrode body in order to obtain the adhesiveness in a dry state. As a result, shrinkage of the microporous membrane containing the polyolefin as a main component can be avoided. When the weight average molecular weight of the polymer (B) is equal to or less than the upper limit of the above preferable range, molecular chains are less likely to be entangled, and sufficient fluidity can be maintained under press conditions. When the weight average molecular weight of the polymer (B) is equal to or more than the lower limit of the preferable range, resin strength can be ensured by an appropriate entanglement of molecular chains, so that cohesive failure of the porous layer can be inhibited.

The lower limit of a content of the copolymer (A) is preferably 75% by mass, more preferably 80% by mass, and the upper limit thereof is preferably 95% by mass, more preferably 90% by mass, based on a total mass of the copolymer (A) and the polymer (B). When the content of the copolymer (A) falls within the above preferable range, the adhesiveness in a wet state is good, and balance with the adhesiveness in a dry state is improved.

Further, other resin may be added to the porous layer. The other resin is preferably an acrylic resin from a viewpoint of further improving the adhesiveness in a dry state.

As for the acrylic resin, a (meth)acrylic acid ester polymer or a copolymer thereof is preferable. In the present invention, the term "(meth)acrylic acid ester" refers to an acrylic acid ester (acrylate) and a methacrylic acid ester (methacrylate). Examples of the (meth)acrylic acid ester include methyl acrylate, ethyl acrylate, n-butyl acrylate, t-butyl acrylate, 2-ethylhexyl acrylate, methyl methacrylate, ethyl methacrylate, n-butyl methacrylate, t-butyl methacrylate, and 2-ethylhexyl methacrylate. Particularly, the butyl acrylate is preferably contained. The butyl acrylate can also be expected to increase flexibility of a coating film and to inhibit falling of the particles.

[3] Particles in porous layer

The porous layer in the present invention may also contain particles. By including the particles in the porous layer, a chance of occurrence of short circuit between the positive electrode and the negative electrode can be reduced, and improvement in safety can be expected. The particles may be inorganic particles or organic particles.

Examples of the inorganic particles include calcium carbonate, calcium phosphate, amorphous silica, crystalline glass particles, kaolin, talc, titanium dioxide, alumina, silica-alumina composite oxide particles, barium sulfate, calcium fluoride, lithium fluoride, zeolite, molybdenum sulfide, mica, boehmite, and magnesium oxide. Particularly, titanium dioxide, alumina, boehmite, and barium sulfate are preferable from viewpoints of crystal growth, costs, and availability of a vinylidene fluoride-hexafluoropropylene copolymer.

Examples of the organic particles include crosslinked polystyrene particles, crosslinked acrylic resin particles, and crosslinked methyl methacrylate-based particles.

When a total volume of the particles, the copolymer (A) and the polymer (B) is defined as 100%, the upper limit of a content of the particles contained in the porous layer is preferably 75% by volume, and more preferably 70% by volume, and the lower limit thereof is preferably 40% by volume, more preferably 45% by volume, and still more preferably 50% by volume. When particles having no adhesiveness are contained in the porous layer, adhesiveness in a dry state or adhesiveness in a wet state are likely to decrease. However, balance between the adhesiveness in a dry state and the adhesiveness in a wet state with respect to the electrode is good even if the porous layer obtained by the resin composition of the present invention contains particles in the above preferable range. Further, an increase in air permeability can be inhibited.

The average particle diameter of the particles is preferably 1.5 times or more and 50 times or less of an average flow pore diameter of the microporous membrane, more preferably 2.0 times or more and 20 times or less, from a viewpoint of making the particles less likely to fall off. The average flow pore diameter can be measured in an order of Dry-up and Wet-up using, for example, a palm porometer (CFP-1500Amanufactured by PMI) according to JIS K3832 or ASTM F316-86. During the Wet-up, pressure is applied to the microporous membrane sufficiently immersed in Galwick (trade name) manufactured by PMI whose surface tension is known. A hole diameter converted from pressure at which air starts to penetrate the microporous membrane is defined as a maximum pore diameter. For the average flow rate size, the pore size was calculated from the pressure used in Dry-up measurements and the pressure at a point where a curve indicating a 1/2 slope of the flow rate curve and a curve of the Wet-up measurements intersect. The following mathematical formula is used to convert between the pressure and the pore diameter.

$$d = C \cdot \gamma / P$$

In the above formula, "d ($\mu$m)" is a pore diameter of a microporous membrane, "$\gamma$ (mN/m)" is surface tension of liquid, "P (Pa)" is pressure, and "C" is constant.

The average particle diameter of the particles is preferably 0.3 $\mu$m or more and 1.8 $\mu$m or less, more preferably 0.5 $\mu$m or more and 1.5 $\mu$m or less, and still more preferably 0.9 $\mu$m or more and 1.3 $\mu$m or less from viewpoints of preventing particles from dropping off and of slipperiness with respect to a winding core when the electrode body is wound. The average particle diameter of the particles can be measured using a laser diffraction method or a dynamic light scattering type measurement apparatus. For example, it is preferable that particles dispersed in an aqueous solution containing a surfactant using an ultrasonic probe are measured by a particle size distribution analyzer (Microtrac HRA manufactured by Nikkiso Co., ltd.), and a value of a particle diameter (D50) when 50% accumulated from a small particle side in terms of volume conversion is taken as the average particle diameter. Examples of a shape of the particles include, but are not limited to, a spherical shape, a substantially spherical shape, a plate shape, and a needle shape.

[4] Physical properties of porous layer

The thickness of the porous layer per one side of the polyolefin microporous membrane is preferably 0.5 $\mu$m or more and 3 $\mu$m or less, more preferably 1 $\mu$m or more and 2.5 $\mu$m or less, still more preferably 1 $\mu$m or more and 2 $\mu$m or less. The thickness of the porous layer is preferably 0.5 $\mu$m or more since the adhesiveness in a wet state and adhesiveness in a dry state are good. When the thickness of the porous layer is 3 $\mu$m or less, winding volume can be reduced, and it is suitable for increasing a capacity of the battery.

Porosity of the porous layer is preferably 30% or more and 90% or less, more preferably 40% or more and 70% or less. By setting the porosity of the porous layer to fall within the above preferable range, it is possible to prevent an increase in electric resistance of the separator and allow a large current to flow, and film strength can be maintained.

4. Physical properties of battery separator

The adhesiveness of the battery separator in a wet state is indicated by a bending strength in a wet state to be described below. The battery separator preferably has a bending strength in a wet state of 4 N or more. The upper limit of the bending strength in a wet state is preferably 15 N. Within the above preferable range, it is possible to prevent partial peel at an interface between the separator and the electrode, increase of the internal resistance of the battery, and deterioration of the battery characteristics.

The adhesiveness of the battery separator in a dry state is preferably 5 N/m or more with a peel force measured by a 180-degree peel test to be described below. The upper limit of the adhesiveness in a dry state is not particularly determined, and it is sufficient to be 40 N/m. Within the above preferable range, it is expected that a roll electrode body or a laminated electrode body can be transported without loosening.

That is, the battery separator used in the laminated roll of the present invention achieves both the bending strength in a wet state and the adhesiveness in a dry state.

5. Method for manufacturing laminated roll

The method for manufacturing the laminated roll in the present invention includes the following steps (1) to (3) sequentially:

(1) a step of preparing a coating solution in which the copolymer (A) and the polymer (B) are dissolved in a solvent;
(2) a step of applying the coating solution on the microporous membrane and immersing it in a coagulating liquid, followed by washing and drying; and
(3) a step of laminating and winding the dried battery separator with the thermoplastic resin film, thereby obtaining the laminated roll, the thermoplastic resin film having 30 $\mu$g/m$^2$ or less of the linear oligomers derived from the thermoplastic resin present on the surface thereof.

The laminated roll may also be obtained by winding the dried battery separator alone and laminating and winding the battery separator with the thermoplastic resin film within 7 days after storing the battery separator at room temperature of 20°C or lower.

(1) Step of obtaining fluororesin solution

The solvent is not particularly limited as long as it can dissolve the fluororesin and is miscible with the coagulating liquid. The solvent is preferably n-methyl-2-pyrrolidone from viewpoints of solubility and low volatility.

In a case where the porous layer containing particles is provided, the fluororesin is dissolved in the solvent, and the particles are added thereto while stirring. The particles are preliminarily dispersed by stirring the mixture thus obtained with a disperser or the like for a certain time (for example, about one hour). Further, a step (dispersion step) of dispersing the particles using a bead mill or a paint shaker is performed, thereby obtaining a coating solution containing the fluororesin solution with reduced particle aggregation.

(2) Step of applying coating solution on microporous membrane and immersing coagulating liquid, followed by washing and drying

The coating solution is applied to the microporous membrane, and the applied microporous membrane is immersed in the coagulating liquid to allow a coating layer to be phase-separated, and then, the microporous membrane is solidified, washed, and dried in a state of having the three-dimensional network structure. In this manner, a battery separator including a microporous membrane and a porous layer on a surface of the microporous membrane is obtained.

As a method of applying the coating solution to the microporous membrane, a conventionally known method can be used, and examples thereof include a dip coating method, a reverse roll coating method, a gravure coating method, a kiss coating method, a roll brushing method, a spray coating method, an air knife coating method, a Meyer bar coating method, a pipe doctor method, a blade coating method, and a die coating method. These methods can be used alone or in combination.

The coagulating liquid is preferably water, more preferably an aqueous solution containing 1% by mass or more and 20% by mass or less of a solvent friendly for the fluororesin, still more preferably an aqueous solution containing 5% by mass or more and 15% by mass or less of a solvent friendly for the fluororesin. Examples of the friendly solvent include N-methyl-2-pyrrolidone, N,N-dimethylformamide, and N,N-dimethylacetamide. Immersion time in the coagulation liquid is preferably 3 seconds or more. The upper limit of the immersion time is not limited, but is sufficient to be 10 seconds.

Water may be used for washing. Drying can be performed using, for example, hot air at 100°C or lower.

(3) Step of laminating and winding battery separator and thermoplastic resin film

A known laminating apparatus can be used for laminating and winding the battery separator and thermoplastic resin film. Unwinding tension and winding tension can be set as appropriate within the range that a winding shift in the obtained laminated roll does not occur during transportation and the battery separator is not greatly compressed and deformed.

The unwinding tension of the battery separator is preferably 30 N/m or more and 60 N/m or less, more preferably 35 N/m or more and 55 N/m or less, and most preferably 40 N/m or more and 50 N/m or less.

The winding tension of the laminated body obtained by laminating the battery separator and the thermoplastic resin film is preferably 60 N/m or more and 150 N/m or less, more preferably 60 N/m or more and 130 N/m or less, and most preferably 70 N/m or more and 120 N/m or less. Within the above range, the laminated roll can be obtained without a winding shift during transportation and without large compression and deformation of the battery separator.

The battery separator of the present invention can be used as a batter separator for a secondary battery such as a nickel-hydrogen battery, a lithium ion secondary battery, a lithium polymer secondary battery, or a lithium-sulfur battery. Particularly, the battery separator of the present invention is preferably used as a separator for a lithium ion secondary battery.

The length of the battery separator of the laminated roll of the present invention in a winding direction is preferably 1000 m or more from viewpoints of manufacturing efficiency, transportation efficiency, and storage efficiency. In the present invention, good effect of preventing blocking of the porous layer can be obtained even when being wound at 1,000 m or more.

Examples

Hereinafter, the present invention is described in detail with reference to examples, but the present invention is not limited to these examples. Measurement values in the examples are measured by the following methods.

[1] Adhesiveness in wet state

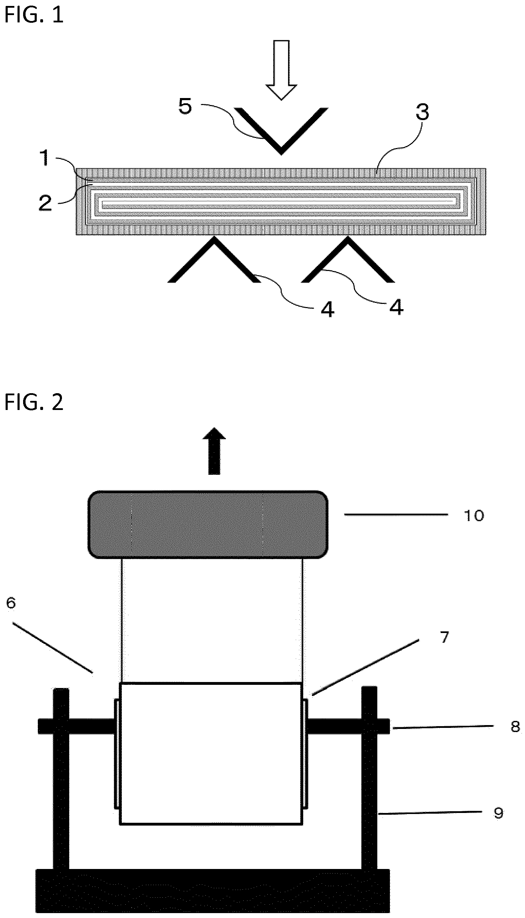

Generally, when a binder of a fluororesin is used in the positive electrode and a porous layer containing the fluororesin is included on the separator, adhesiveness is easily ensured by interdiffusion of the fluororesin. Compared to the positive electrode, the negative electrode is less likely to be bonded to the separator since a binder other than the fluororesin is used in the negative electrode and diffusion of the fluororesin is less likely to occur. Therefore, the adhesiveness in a wet state between the separator and the negative electrode in this measurement was evaluated using bending strength to be described below as an index. The bending strength in a wet state can be evaluated in a manner described in FIG. 1.

(1) Preparation of negative electrode

A negative electrode mixture containing slurry was obtained by adding an aqueous solution containing 1.5 parts by mass of carboxymethyl cellulose to 96.5 parts by mass of artificial graphite and then adding 2 parts by mass of styrene-butadiene latex as a solid content. A negative electrode layer was formed by uniformly applying the slurry containing negative electrode mixture on both surfaces of a negative electrode collector made of a copper foil having a thickness of 8 $\mu$m, followed by drying it. Thereafter, a negative electrode 1 was prepared by compression-molding the negative electrode layer by a roll press machine so that the density of the negative electrode layer except the collector was 1.5 g/cm$^3$.

(2) Preparation of test roll

The negative electrode 1 (161 mm in mechanical direction × 30 mm in width direction) thus prepared was laminated to a separator 2 (160 mm in mechanical direction × 34 mm in width direction) prepared in Examples and Comparative Examples. The separator 2 and the negative electrode 1 were wound around a metal plate (300 mm in length, 25 mm in width, and 1 mm in thickness) serving as a winding core with the separator 2 being on an inner side. The metal plate was then pulled out to obtain a test roll. The test roll had a length of about 34 mm and a width of about 28 mm.

(3) Method of measuring bending strength in wet state

Two sheets of the laminated films 3 made of polypropylene (70 mm in length, 65 mm in width, and 0.07 mm in thickness) were laminated, and the test roll was put in a bag-shaped laminated film 3 in which three sides of four sides were welded. 500 $\mu$L of an electrolytic solution, in which $LiPF_6$ was dissolved at a ratio of 1 mol/L in a solvent in which ethylene carbonate and ethyl methyl carbonate were mixed at a volume ratio of 3:7, was injected from an opening of the laminated film 3 in a glove box and the test roll was immersed therein, and one side of the opening was sealed by a vacuum sealer.

Next, the test roll sealed in the laminated film 3 was interposed by two gaskets (1 mm in thickness, and 5 cm × 5 cm) and pressurized at 98°C and 0.6 MPa for 2 minutes in a precision heating and pressurizing device (CYPT-10 manufactured by Nitto Co., ltd.), followed by cooling in room temperature. The bending strength in a wet state of the pressurized test roll in a state of being sealed in the laminated film was measured using a universal testing machine (AGS-J manufactured by Shimadzu Corporation). Details are described below.

Two aluminum L-shaped angles 4 (1 mm in thickness, 10 mm × 10 mm, and 5 cm in length) were arranged in parallel such that 90° portions thereof were upward. End portions of the angles 4 were aligned and fixed with the 90° portions as fulcrums, so that a distance between the 90° portions was 15 mm. A midpoint of a side (about 28 mm) of the test roll in the width direction was aligned with a 7.5 mm point which is a middle point between the fulcrums of the two aluminum L-shaped angles 4, so that the test roll did not protrude from a side of the L-shaped angles 4 in the length direction.

Next, a side (about 34 mm) of the test roll in a length direction was parallel to and did not protrude from a side of an aluminum L-shaped angle 5 as an indenter (1 mm in thickness, 10 mm × 10 mm, and 4 cm in length) in a length direction. The middle point of the side of the test roll in the width direction was aligned with a 90° portion of the aluminum L-shaped angle 5. The aluminum L-shaped angle 5 was fixed to a load cell (load cell capacity: 50 N) of a universal testing machine such that the 90° portion was downward. An average value of maximum test forces obtained by measuring three text roll at a load speed of 0.5 mm/min was taken as the bending strength in a wet state.

[2] Adhesiveness in dry state

(1) Preparation of negative electrode

A negative electrode the same as that used for the measurement of the bending strength in a wet state was used.

(2) Preparation of peel specimen

The negative electrode (70 mm × 15 mm) prepared above and the separator (90 mm in machine direction × 20 mm in width direction) prepared in Examples and Comparative Examples were laminated and interposed by two gaskets (0.5 mm in thickness, and 95 mm × 27 mm), and were pressurized at 90°C and 8 MPa for 2 minutes in a precision heating and pressurizing device (CYPT-10 manufactured by Nitto Co., ltd.), followed by cooling in room temperature. A double-sided tape having a width of 1 cm was attached to the negative electrode side of the laminated body of the negative electrode and the separator, and another side of the double-sided tape was attached to an SUS plate (3 mm in thickness, and 150 mm in length × 50 mm in width) such that a mechanical direction of the separator was parallel to a length direction of the SUS plate. The peel specimen was thus prepared.

(3) Method of measuring adhesiveness in dry state

The separator was interposed into a load cell chuck using a universal testing machine (AGS-J manufactured by Shimadzu Corporation, not illustrated) to perform a 180° peel test at a test speed of 300 mm/min. A value obtained by averaging measured values of a stroke during the peel test from 20 mm to 70 mm was taken as the peel strength of the peeling specimen. Three peel specimens were measured in total, and a value obtained by converting an average value of peel strengths based on a width was taken as the adhesiveness in a dry state (N/m).

[3] Blocking resistance

The blocking resistance was determined by measuring unwinding tension of the roll using a universal testing machine. First, the roll of the battery separator alone or the laminated roll obtained in Examples and Comparative Examples was slit to a width of 50 mm and stored in an environment of 60°C for 24 hours to prepare a sample roll 6. Next, as illustrated in FIG. 2, the sample roll 6 was fixed to a stand 9 through a metal round bar 8 in a resin core 7. The laminated body of the battery separator and the thermoplastic resin film, or the battery separator was unwound from the resin core 7 with a length of 50 m left, and an end portion thereof was fixed to a chuck 10 of a universal testing machine (AGS-J manufactured by Shimadzu Corporation, not illustrated). A value obtained by averaging measured values of a stroke during the peel text from 50 mm to 400 mm at a test speed of 500 mm/min was taken as the unwinding tension. Three unwinding tensions were measured in total.

(Determination)

When the unwinding tension is 0.3 N/50 mm or less, the blocking resistance was good
When the unwinding tension exceeds 0.3 N/50 mm, the blocking resistance was poor

[4] Measurement of melting point

In a differential scanning calorimeter (DSC, manufactured by Perkin Elmer), 7 mg of the resin was put in a measurement pan as a measurement sample and measured under the following conditions. After a first temperature rise and fall, a peak top of an endothermic peak at a second temperature rise was defined as the melting point.
Rate of temperature rise and fall: $\pm$10°C/min
Range of measurement temperature: 30°C or more and 230°C or less

[5] Measurement of thickness

The thickness was determined from an average value of measured values obtained by measuring 20 points using a contact-type film thickness meter ("Lightmatic" (registered trademark) series 318, manufactured by Mitutoyo Corporation) and a carbide spherical surface measuring element $\varphi$ 9.5 mm under the condition of a load of 0.01 N.

[6] Amount of linear oligomers on surface of thermoplastic resin film

The amount of linear oligomers on the surface of the thermoplastic resin film in the present invention refers to the amount of linear oligomers measured by the following measurement method.
First, two surfaces of the thermoplastic resin film to be extracted faced each other and were fixed to a frame with a spacer between them, so that an area of 25.2 cm $\times$ 12.4 cm of each of the two surfaces could be extracted. 30 mL of ethanol was injected between the extracted surfaces, and the linear oligomers on the film surfaces were extracted at 25°C for 3 minutes. After the extract was evaporated and dried, a dry solid residue of the extract thus obtained was adjusted to 200 $\mu$L of dimethylformamide. Next, the linear oligomers were quantitatively determined using high performance liquid chromatography from a calibration curve obtained in advance by the following method. The amount of linear oligomers was defined by the total amount of dimers and trimers.

(Measurement conditions)

Apparatus: ACQUITY UPLC (manufactured by Waters)
Column: BEH-C18 2.1 $\times$ 150 mm (manufactured by Waters)
Mobile phase: Eluent A: 0.1% of formic acid (v/v)
Eluent B: acetonitrile
Gradient B%: 10$\rightarrow$98$\rightarrow$98% (0$\rightarrow$25$\rightarrow$30 min)
Flow rate: 0.2 mL/min
Column temperature: 40°C
Detector: UV-258nm.

[7] Haze of thermoplastic resin film

The haze of the thermoplastic resin film was measured using a turbidimeter (NDH2000, manufactured by Nippon Denshoku Co., ltd.).

[8] Transferability of porous layer

The laminated roll obtained in Examples and Comparative Examples was slit to a width of 50 mm and stored in an environment of 60°C for 24 hours. Next, the laminated body of the battery separator and the thermoplastic resin film was unwound, so as to obtain a roll from the resin core 7, with a length of 50 m left. The roll was unwound while the battery separator and the thermoplastic resin film were peeled off from its surface layer, so that the presence or absence of transfer of the porous layer of the battery separator to the thermoplastic resin film was visually observed.

(Determination)

Good; no transfer observed.
Poor; transfer observed.

[Example 1]

As the copolymer (A), a vinylidene fluoride-hexafluoropropylene copolymer (copolymer (a)) was synthesized by a suspension polymerization method using vinylidene fluoride, hexafluoropropylene, and maleic acid monomethyl ester as starting materials. The obtained copolymer (a) had a weight average molecular weight of 1,500,000 and a molar ratio of vinylidene fluoride/hexafluoropropylene/maleic acid monomethyl ester of 98.0/1.5/0.5, which was confirmed by NMR measurement.

As the polymer (B), a vinylidene fluoride-hexafluoropropylene copolymer (copolymer (b1)) was synthesized by a suspension polymerization method using vinylidene fluoride and hexafluoropropylene as starting materials. The obtained copolymer (b1) had a weight average molecular weight of 300,000 and a molar ratio of vinylidene fluoride/hexafluoropropylene of 93/7, which was confirmed by NMR measurement.

Preparation of battery separator

26 parts by mass of the copolymer (a) and 4 parts by mass of the copolymer (b1) were mixed with 600 parts by mass of NMP. Thereafter, 70 parts by mass of alumina particles (average particle diameter: 1.1 $\mu$m) were added to the mixture while stirring the mixture with a disperser. The mixture thus obtained was further stirred at 2000 rpm for 1 hour with a disperser. Next, the mixture was treated three times using a DYNO-mill (Dyno Mill Multi Lab manufactured by Shinmaru Enterprises (container of 1.46 L, filling rate of 80%, and alumina beads of $\varphi$0.5 mm)) under the condition of a flow rate of 11 kg/hr and a peripheral speed of 10 m/s, thereby obtaining a coating solution A. The coating solution A was applied to both surfaces of a polyethylene microporous membrane having a thickness of 7 $\mu$m, a porosity of 40%, and an air permeability of 100 sec/100 cc by dip coating method. The film thus obtained was immersed in water, washed with pure water, and then dried at 50°C, thereby obtaining a roll of a battery separator alone having a length of 1500 m and a thickness of 11 $\mu$m. At this time, the winding tension was 50 N/m, and the winding speed was 50 m/min.

Subsequently, a laminated roll was obtained by laminating and winding a polyethylene terephthalate film having a haze of 2.0% using a laminating apparatus. The polyethylene terephthalate film was a thermoplastic resin film having a thickness of 12 $\mu$m and an amount of linear oligomers on the film surface of 9 $\mu$g/m$^2$, and containing 600 ppm of silica particles having an average particle diameter of 2 $\mu$m as inorganic particles.

The unwinding tension of the battery separator was 50 N/m, the unwinding tension of the polyethylene terephthalate film was 89 N/m, and the winding tension of the laminated body of the battery separator and the polyethylene terephthalate film was 113 N/m.

[Example 2]

A coating solution B was obtained in the same manner as in Example 1 except that 24 parts by mass of the copolymer (a) and 6 parts by mass of the copolymer (b1) were used. A laminated roll was obtained in the same manner as in Example 1 except that the coating solution B was used instead of the coating solution A.

[Example 3]

A coating solution C was obtained in the same manner as in Example 1 except that 22 parts by mass of the copolymer (a) and 8 parts by mass of the copolymer (b1) were used. A laminated roll was obtained in the same manner as in Example 1 except that the coating solution C was used instead of the coating solution A.

[Example 4]

A laminated roll was obtained in the same manner as in Example 1 except that a polyethylene terephthalate film having a haze of 3.4% was used as the thermoplastic resin film, the polyethylene terephthalate film having a thickness of 25 μm and an amount of linear oligomers on the film surface of 17 μg/m$^2$, and containing 1000 ppm of silica particles having an average particle diameter of 2 μm as the inorganic particles.

[Example 5]

A laminated roll was obtained in the same manner as in Example 1 except that a polyethylene terephthalate film having a haze of 1.7% was used as the thermoplastic resin film, the polyethylene terephthalate film having a thickness of 9 μm and an amount of linear oligomers on the film surface of 7 μg/m$^2$, and containing 300 ppm of silica particles having an average particle diameter of 2 μm as the inorganic particles.

[Example 6]

A laminated roll was obtained in the same manner as in Example 1 except that a polyethylene terephthalate film having a haze of 2.0% was used as the thermoplastic resin film, the polyethylene terephthalate film having a thickness of 12 μm and an amount of linear oligomers on the film surface of 5 μg/m$^2$.

[Example 7]

A laminated roll was obtained in the same manner as in Example 1 except that the polyethylene microporous membrane was replaced with a polyethylene microporous membrane having a thickness of 5 μm, a porosity of 35%, and an air permeability of 110 sec/100 cc.

[Example 8]

As the polymer (B), a vinylidene fluoride-tetrafluoroethylene copolymer (copolymer (b2)) was synthesized by a suspension polymerization method using vinylidene fluoride and tetrafluoroethylene as starting materials. The obtained copolymer (b2) had a weight average molecular weight of 280,000 and a molar ratio of vinylidene fluoride/tetrafluoroethylene of 90/10, which was confirmed by NMR measurement.
A coating solution D was obtained in the same manner as in Example 1 except that the copolymer (b2) was used instead of the copolymer (b1). A laminated roll was obtained in the same manner as in Example 1 except that the coating solution D was used instead of the coating solution A.

[Example 9]

44 parts by mass of the copolymer (a) and 6 parts by mass of the copolymer (b1) were blended with 850 parts by mass of NMP. Thereafter, 50 parts by mass of alumina particles (average particle diameter: 1.1 μm) were added to the mixture while stirring the mixture with a disperser. The mixture thus obtained was further stirred at 2000 rpm for 1 hour with a disperser. Next, the mixture was treated three times using a DYNO-mill (Dyno Mill Multi Lab manufactured by Shinmaru Enterprises (container of 1.46 L, filling rate of 80%, and alumina beads of φ0.5 mm)) under the condition of a flow rate of 11 kg/hr and a peripheral speed of 10 m/s, thereby obtaining a coating solution E. A laminated roll was obtained in the same manner as in Example 1 except that the coating solution E was used instead of the coating solution A.

[Example 10]

A coating solution F was obtained in the same manner as in Example 1 except that the alumina particles were not added. A laminated roll was obtained in the same manner as in Example 1 except that the coating solution F was used instead of the coating solution A.

[Comparative Example 1]

A roll of only a battery separator was obtained using the same laminating apparatus as in Example 1 without using a thermoplastic resin film for the battery separator obtained in Example 1. Winding tension of the battery separator was 40 N/m.

[Comparative Example 2]

A laminated roll was obtained in the same manner as in Example 1 except that a polyethylene terephthalate film having a haze of 2.3% was used as the thermoplastic resin film, the polyethylene terephthalate film having a thickness of 12 $\mu$m and an amount of linear oligomers on the film surface of 33 $\mu$g/m$^2$, and containing 700 ppm of silica particles having an average particle diameter of 2 $\mu$m as the inorganic particles.

[Comparative Example 3]

A N-methyl-2-pyrrolidone solution of polyamide-imide resin (Vylomax HR-16NN manufactured by Toyobo Co., Ltd., solid content of 14% by mass) was blended with 600 parts by mass of NMP. Thereafter, 70 parts by mass of alumina particles (average particle diameter: 1.1 $\mu$m) were added to the mixture while stirring the mixture with a disperser. The mixture thus obtained was further stirred at 2000 rpm for 1 hour with a disperser. Next, the mixture was treated three times using a DYNO-mill (Dyno Mill Multi Lab manufactured by Shinmaru Enterprises (container of 1.46 L, filling rate of 80%, and alumina beads of $\varphi$0.5 mm)) under the condition of a flow rate of 11 kg/hr and a peripheral speed of 10 m/s, thereby obtaining a coating solution G. A laminated roll was obtained in the same manner as in Comparative Example 1 except that the coating solution G was used instead of the coating solution A.

Properties of the battery separator, the laminated roll, and the roll of the battery separator alone obtained in Examples 1 to 10 and Comparative Examples 1 to 3 are shown in Table 1.

Table 1

| | Polyethylene microporous membrane | Porous layer | | | | | | | |
|---|---|---|---|---|---|---|---|---|---|
| | Thickness (μm) | Coating solution | Content (wt%) | | | Content (%) of copolymer (A)* | Polymer (B) | | |
| | | | Particles | Copolymer (A) | Polymer (B) | | Kind | Melting point (°C) | Mw |
| Example 1 | 7 | A | 70 | 26 | 4 | 87% | b1 | 135 | 300,000 |
| Example 2 | 7 | B | 70 | 24 | 6 | 80% | b1 | 135 | 300,000 |
| Example 3 | 7 | C | 70 | 22 | 8 | 73% | b1 | 135 | 300,000 |
| Example 4 | 7 | A | 70 | 26 | 4 | 87% | b1 | 135 | 300,000 |
| Example 5 | 7 | A | 70 | 26 | 4 | 87% | b1 | 135 | 300,000 |
| Example 6 | 7 | A | 70 | 26 | 4 | 87% | b1 | 135 | 300,000 |
| Example 7 | 5 | A | 70 | 26 | 4 | 87% | b1 | 135 | 300,000 |
| Example 8 | 7 | D | 70 | 26 | 4 | 87% | b2 | 133 | 280,000 |
| Example 9 | 7 | E | 50 | 44 | 6 | 88% | b1 | 135 | 300,000 |
| Example 10 | 7 | F | 0 | 26 | 4 | 87% | b1 | 135 | 300,000 |
| Comparative Example 1 | 7 | A | 70 | 26 | 4 | 87% | b1 | 135 | 300,000 |
| Comparative Example 2 | 7 | A | 70 | 26 | 4 | 87% | b1 | 135 | 300,000 |
| Comparative Example 3 | 7 | G | 70 | - | - | - | - | - | - |

Table 1 continued

| | Thermoplastic resin film | | | | Battery separator | | | |
|---|---|---|---|---|---|---|---|---|
| | Thickness (μm) | Content of inorganic particles (ppm) | Amount of linear oligomers ($\mu$ g/m$^2$) | Haze (%) | Bending strength in wet state (N) | Adhesiveness in dry state (N) | Blocking resistance | Transferability of porous layer |
| Example 1 | 12 | 600 | 9 | 2.0 | 6.9 | 6.5 | Good | Good |
| Example 2 | 12 | 600 | 9 | 2.0 | 6.4 | 7.2 | Good | Good |
| Example 3 | 12 | 600 | 9 | 2.0 | 6.0 | 8.1 | Good | Good |
| Example 4 | 25 | 1000 | 17 | 3.4 | 6.9 | 6.5 | Good | Good |
| Example 5 | 9 | 300 | 7 | 1.7 | 6.9 | 6.5 | Good | Good |
| Example 6 | 12 | 600 | 5 | 2.0 | 6.9 | 6.5 | Good | Good |
| Example 7 | 12 | 600 | 9 | 2.0 | 6.9 | 6.5 | Good | Good |
| Example 8 | 12 | 600 | 9 | 2.0 | 6.9 | 6.5 | Good | Good |
| Example 9 | 12 | 600 | 9 | 2.0 | 8.7 | 7.8 | Good | Good |
| Example 10 | 12 | 600 | 9 | 2.0 | 11.6 | 8.4 | Good | Good |
| Comparative Example 1 | - | - | - | - | 6.9 | 6.5 | Poor | Good |
| Comparative Example 2 | 12 | 700 | 33 | 2.3 | 6.9 | 6.5 | Good | Poor |
| Comparative Example 3 | - | - | - | - | 0.9 | Impossible to measure | Good | Good |

Content (%) of copolymer (A)*: indicating % by mass of the copolymer (A) based on the total mass of the copolymer (A) and the polymer (B).

Description of Reference Numerals

1: Negative electrode
2: Separator
3: Laminated film
4: Aluminum L-shaped angle
5: Aluminum L-shaped angle as indenter
6: Sample roll
7: Resin core
8: Metal round bar
9: Stand
10: Chuck of universal testing machine

**Claims**

1.  A laminated roll, in which a battery separator and a film are laminated and wound,
    wherein the battery separator comprises a porous layer containing a fluororesin on at least one surface of a polyolefin microporous membrane,
    wherein the film comprises an inorganic particle and a thermoplastic resin, and
    wherein an amount of linear oligomers derived from the thermoplastic resin on a surface of the film is 30 $\mu$g/m$^2$ or less.

2.  The laminated roll according to claim 1, wherein the fluororesin contains a vinylidene fluoride-hexafluoropropylene copolymer.

3.  The laminated roll according to claim 2, wherein the vinylidene fluoride-hexafluoropropylene copolymer has a weight average molecular weight of more than 750,000 and 2,000,000 or less.

4.  The laminated roll according to any one of claims 1 to 3,
    wherein the fluororesin contains a vinylidene fluoride-hexafluoropropylene copolymer (A) and a polymer (B) containing a vinylidene fluoride unit,
    wherein the vinylidene fluoride-hexafluoropropylene copolymer (A) contains a hydrophilic group and a hexafluoropropylene unit, and a content of the hexafluoropropylene unit is 0.3 mol% or more and 3 mol% or less, and
    wherein the polymer (B) containing a vinylidene fluoride unit has a melting point of 60°C or higher and 145°C or lower and a weight average molecular weight of 100,000 or more and 750,000 or less.

5.  The laminated roll according to any one of claims 1 to 4, wherein the porous layer contains a particle.

6.  The laminated roll according to claim 5, wherein the particle includes at least one selected from the group consisting of alumina, titania, boehmite, and barium sulfate.

7.  The laminated roll according to any one of claims 1 to 6, wherein the porous layer has a thickness of 0.5 $\mu$m or more and 3 $\mu$m or less per one side of the polyolefin microporous membrane.

8.  The laminated roll according to any one of claims 1 to 7, wherein the thermoplastic resin contains polyethylene terephthalate.

9.  The laminated roll according to any one of claims 1 to 8, wherein the film has a thickness of 5 $\mu$m or more and 50 $\mu$m or less.

10.  The laminated roll according to any one of claims 1 to 9, wherein the battery separator has a length of 1000 m or more in a winding direction.

FIG. 1

FIG. 2

**INTERNATIONAL SEARCH REPORT**

| International application No. |
| --- |
| PCT/JP2017/027021 |

| A. CLASSIFICATION OF SUBJECT MATTER |
| --- |
| *H01M2/16*(2006.01)i, *H01M10/04*(2006.01)i, *H01M10/0587*(2010.01)n |

According to International Patent Classification (IPC) or to both national classification and IPC

| B. FIELDS SEARCHED |
| --- |

| Minimum documentation searched (classification system followed by classification symbols) |
| --- |
| H01M2/16, H01M10/04, H01M10/0587 |

| Documentation searched other than minimum documentation to the extent that such documents are included in the fields searched |
| --- |
| Jitsuyo Shinan Koho          1922–1996   Jitsuyo Shinan Toroku Koho   1996–2017<br>Kokai Jitsuyo Shinan Koho    1971–2017   Toroku Jitsuyo Shinan Koho   1994–2017 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2002-100394 A  (Denso Corp.),<br>05 April 2002 (05.04.2002),<br>claims; examples<br>(Family: none) | 1-10 |
| A | JP 2004-14417 A  (NISSHA Printing Co., Ltd.),<br>15 January 2004 (15.01.2004),<br>claims; examples<br>(Family: none) | 1-10 |
| A | JP 2015-92488 A  (Asahi Kasei E-materials Corp.),<br>14 May 2015 (14.05.2015),<br>claims; examples<br>(Family: none) | 1-10 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 06 October 2017 (06.10.17) | 17 October 2017 (17.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

## INTERNATIONAL SEARCH REPORT

| International application No. |
| --- |
| PCT/JP2017/027021 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | WO 2013/058367 A1  (Teijin Ltd.),<br>25 April 2013 (25.04.2013),<br>claims; examples<br>& US 2014/0242444 A1<br>claims; examples<br>& CN 103891002 A          & KR 10-2014-0072103 A<br>& TW 201332195 A | 1-10 |
| A | JP 2016-28402 A  (Toray Advanced Film Co.,<br>Ltd.),<br>25 February 2016 (25.02.2016),<br>claims; examples<br>& US 2013/0216892 A1<br>claims; examples<br>& WO 2012/056846 A1      & CN 103190028 A<br>& KR 10-2013-0129936 A | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1999036981 A1
- JP 2013206846 A
- JP 2013122009 A
- JP 2013519206 A
- JP 5282179 B
- JP 5282180 B
- JP 5282181 B
- JP 5342088 B
- JP 2004148538 A
- JP 2132327 A
- JP 3347835 B
- WO 2006137540 A1
- JP 2002256099 A
- JP H11130821 A